(19) Europäisches Patentamt
European Patent Office
Office européen des brevets

(11) Veröffentlichungsnummer: **0 023 991**
**B1**

# (12) EUROPÄISCHE PATENTSCHRIFT

(45) Veröffentlichungstag der Patentschrift: **27.07.83**

(51) Int. Cl.³: **C 09 B 23/14**, D 21 H 3/80, D 06 P 1/42

(21) Anmeldenummer: **80104229.2**

(22) Anmeldetag: **18.07.80**

(54) **Styrylfarbstoffe, ihre Herstellung und ihre Verwendung zum Färben von insbesondere Papier.**

(30) Priorität: **08.08.79 DE 2932092**

(43) Veröffentlichungstag der Anmeldung: **18.02.81 Patentblatt 81/7**

(45) Bekanntmachung des Hinweises auf die Patenterteilung: **27.07.83 Patentblatt 83/30**

(84) Benannte Vertragsstaaten: **BE CH DE FR GB IT LI**

(56) Entgegenhaltungen:
**FR-A-2 087 210**
**US-A-2 280 253**
**US-A-3 582 332**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Beecken, Hermann, Dr., Curiestrasse 1, D-5060 Bergisch-Gladbach 2 (DE)**

**EP 0 023 991 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Styrylfarbstoffe, ihre Herstellung und ihre Verwendung zum Färben von insbesondere Papier

Gegenstand der vorliegenden Erfindung sind Styrylfarbstoffe der allgemeinen Formel

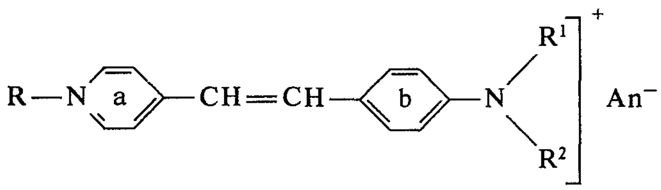

(I)

worin

| | |
|---|---|
| R | einen niederen Alkyl- oder Alkenylrest und |
| $R^1$ und $R^2$ | niedere Alkyl- oder Alkenylreste bezeichnen, die gemeinsam mit dem Stickstoffatom, an das sie gebunden sind, einen 5- oder 6gliedrigen heterocyclischen Ring bilden können, und |

worin

| | |
|---|---|
| R, $R^1$ und $R^2$ | durch nichtionische Reste substituiert sein können und mindestens einer der Reste |
| R, $R^1$ und $R^2$ | direkt oder über eine Brücke durch einen Arylrest substituiert ist oder einer der Reste |
| $R^1$ oder $R^2$ | einen Arylrest darstellt, |
| Ring a | durch 1—2 Methyl oder Ethyl, |
| Ring b | durch 1—2 Methyl, Ethyl, Methoxy oder Ethoxy oder durch 1 Halogenatom substituiert sein kann und |
| $An^-$ | für ein Anion steht, |

sowie deren Herstellung und Verwendung zum Färben natürlicher und synthetischer, kationisch färbbarer Substrate, insbesondere zum Massefärben, Beschreiben und Bedrucken von Papier.

Bevorzugte Farbstoffe der Formel I sind solche der allgemeinen Formel

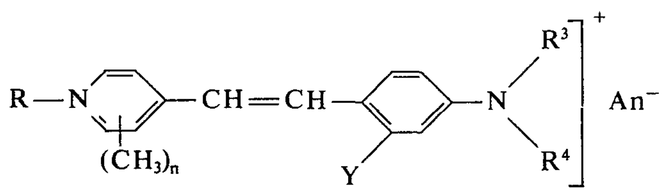

(II)

worin

| | |
|---|---|
| $An^-$ | die vorgenannte Bedeutung besitzt, |
| R, $R^3$ und $R^4$ | niedere Alkyl- oder Alkenylreste darstellen, die durch nichtionische Reste substituiert sein können, und mindestens einer dieser Reste direkt oder über eine Brücke durch einen Arylrest substituiert ist bzw. einer der Reste |
| $R^3$ oder $R^4$ | einen Arylrest bedeutet, |
| n | 0 bis 2 und |
| Y | H, $CH_3$, $OCH_3$, $OC_2H_5$ oder Cl ist. |

Vorstehend bezeichnet der Ausdruck »niedere Alkylreste« geradkettige oder verzweigte Reste mit vorzugsweise $C_1$- bis $C_4$-Alkylgruppen.

»Niedere Alkenylreste« sind insbesondere $C_3$- oder $C_4$-Alkenylreste.

In der Farbstoffchemie übliche nichtionische Substituenten sind z. B. Halogen, Cyan, Hydroxy, $C_1$- bis $C_4$-Alkoxy, Phenyloxy, Benzyloxy, $C_1$- bis $C_3$-Alkylcarbonyl, $C_1$- bis $C_4$-Alkoxycarbonyl, Benzyloxycarbonyl, $C_1$- bis $C_3$-Alkylcarbonyloxy, Benzoyl, Benzoyloxy, gegebenenfalls durch $C_1$- bis $C_4$-Alkyl, Phenyl oder Benzyl substituiertes Carbamoyl, $C_1$- bis $C_4$-Alkylsulfonyl, Phenylsulfonyl, Benzylsulfonyl, $C_1$- bis $C_4$-Alkylsulfonylamino, Phenylsulfonylamino, Benzylsulfonylamino, $C_1$- bis $C_3$-Alkylcarbonylamino, Benzoylamino, gegebenenfalls durch $C_1$- bis $C_4$-Alkyl, Phenyl oder Benzyl substituiertes Carbamoyloxy, $C_1$- bis $C_4$-Alkylmercapto, Phenylmercapto, Cyclopentyl oder Cyclohexyl. Dabei können die cyclischen Reste ihrerseits durch $C_1$- bis $C_4$-Alkyl, Nitro oder die vorstehend genannten Reste substituiert sein.

Auch die in den Formeln (I) und (II) genannten Arylreste können diese Substituenten tragen.

Als Beispiele seien genannt:

F, Cl, Br, CN, $COCH_3$, $COC_2H_5$, $COC_6H_5$, $COOCH_3$, $COOC_2H_5$, $COOC_3H_7$, $COOC_4H_9$, $COOCH_2C_6H_5$, $CONH_2$, $CONHCH_3$, $CON(CH_3)_2$, $CONHC_6H_5$, $CONHCH_2C_6H_5$, OH, $OCH_3$, $OC_2H_5$, $OC_3H_7$, $OC_4H_9$, $OC_6H_5$, $OC_6H_4Cl$ (o-, m- oder p-), $OC_6H_4CH_3$ (o-, m- oder p-), $OCH_2C_6H_5$, $OCH_2C_6H_4Cl$ (o-, m- oder p-), 2-, 3- oder 4-Cyclopentyl-phenoxy, 2-, 3- oder 4-Cyclohexyl-phenoxy, 2-, 3- oder 4-tert.-Butyl-phenoxy, 2-, 3- oder 4-Phenyl-phenoxy, $OCOCH_3$, $OCOC_2H_5$, $OCOC_3H_7$, $OCOC_6H_5$, $OCOC_6H_4CH_3$ (o-, m- oder p-), $OCOC_6H_4Cl$ (o-, m- oder p-), $OCOC_6H_4OCH_3$ (o-, m- oder p-), $OCOC_6H_4C_6H_5$ (p-), $OCOCH_2C_6H_5$, $OCOCH_2C_6H_4CH_3$ (o-, m- oder p-), $OCOCH_2C_6H_4Cl$ (o-, m- oder p-), $OCONHCH_3$, $OCONHC_2H_5$, $OCONHC_3H_7$, $OCONHC_4H_9$, $OCONHC_6H_5$, $OCON(CH_3)_2$, $OCON(C_2H_5)_2$, $SCH_3$, $SC_2H_5$, $SC_3H_7$, $SC_4H_9$, $SC_6H_5$, $SO_2C_6H_5$, Benzthiazol-2-yl-mercapto, $NHCOCH_3$, $NHCOC_2H_5$, $NHCOC_6H_5$, $NHSO_2CH_3$, $NHSO_2C_6H_5$, $NHSO_2CH_2C_6H_5$ usw.

Es ist klar, daß mit der Nennung der gebräuchlicheren nichtionischen Substituenten keine Beschränkung beabsichtigt wird, sondern daß diese im Rahmen der Erfindung noch vielfältige Variationen gestatten.

Der gemeinsame Ringschluß der Reste $R^1$ und $R^2$ mit dem N-Atom, an das sie gebunden sind, ergibt heterocyclische Gruppen folgender Art:

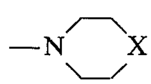

mit X = direkte Bindung, $CH_2$, O, S, $SO_2$, NH, $NCH_3$, $NC_2H_5$, NCHO, $NCOCH_3$, $NSO_2CH_3$.

Unter einer Brücke, die einen Arylrest mit einem für R, $R_1$ und $R_2$ bzw. $R_3$ und $R_4$ stehenden Alkyl- oder Alkenylrest verbindet, werden beispielweise verstanden:

$$-O-(CH_2)_m-$$

$$-O-CH_2-CH_2-O-(CH_2)_m-$$

$$-O-CO-(CH_2)_n-$$

$$-COO-(CH_2)_p-$$

$$-O-CO-NH-(CH_2)_n-$$

$$-NH-$$

$$-NH-CO-(CH_2)_n-$$

mit $m = 0, 1, 2$, $n = 0, 1$, $p = 1, 2$

wobei die linke Seite der Brücke mit dem Alkyl- bzw. Alkenylrest verbunden ist.

Unter einem Arylrest wird vorstehend insbesondere Phenyl oder Diphenyl verstanden, deren bevorzugte Substituenten sind: 1 bis 3 $C_1$- bis $C_3$-Alkyl, $C_1$- bis $C_4$-Alkoxy, $C_1$- bis $C_4$-Alkoxycarbonyl, $C_5$- bis $C_6$-Cycloalkyl, $CH_2C_6H_5$, $C(CH_3)_2C_6H_5$, $OC_6H_5$, $OCH_2C_6H_5$, $SO_2C_6H_5$, CN, ferner 1 bis 3 Cl, 1 bis 2 F oder Br.

Die Bezeichnung Halogen steht oben vorzugsweise für Chlor, daneben für Fluor oder Brom.

Als Anionen $An^-$ kommen die für kationische Farbstoffe üblichen anorganischen und organischen Anionen in Frage (vgl. z. B. deutsche Offenlegungsschriften 2 128 326, Seiten 5—7, und 2 520 816, Seiten 4—6).

Bevorzugt sind farblose Anionen, die dem betreffenden Farbstoff die für den vorgesehenen Färbevorgang gewünschten Löslichkeitseigenschaften verleihen.

Das Anion ist zumeist durch das Herstellungsverfahren und die evtl. vorgenommene Reinigung der kationischen Verbindungen gegeben. Im allgemeinen liegen die Farbstoffe als Halogenide, insbesondere Chloride oder Bromide, oder als Methosulfate, Ethosulfate, Sulfate, Nitrate, Chlorzinkate, Benzol-, Toluol- oder Naphthalinsulfonate oder als Acetate, Lactate oder dergleichen vor. Diese Anionen können in bekannter Weise gegen andere ausgetauscht werden. Hierzu zählt auch die Möglichkeit der Fällung der Farbstoffkationen mit schwerlöslich machenden — gegebenenfalls

auch komplexen — Anionen (»FANAL-Salze«) oder mit Farbstoffanionen.

Von den Farbstoffen der Formel I sind diejenigen hervorzuheben, worin

R einen niederen Alkyl- oder Alkenylrest darstellt, der direkt oder über eine Brücke durch einen Arylrest substituiert ist, oder worin

$R^1$ und/oder $R^2$ unabhängig voneinander einen niederen Alkyl- oder Alkenylrest, der direkt oder über eine Brücke durch einen Arylrest substituiert ist, oder einen Arylrest darstellen.

Von besonderem technischen Interesse sind die Farbstoffe der allgemeinen Formel

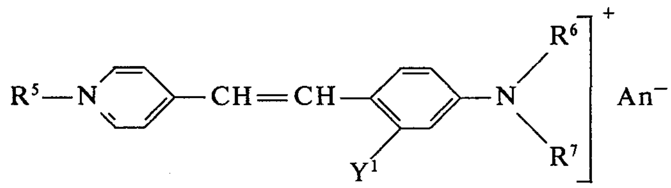

(III)

worin

| | |
|---|---|
| $An^-$ | die oben angegebene Bedeutung besitzt, |
| $R^5$, $R^6$ und $R^7$ | für $C_1$- bis $C_4$-Alkyl, das durch Phenyl oder $C_1$- bis $C_4$-Alkoxycarbonyl substituiert sein kann, $C_3$- oder $C_4$-Alkenyl, das durch Phenyl substituiert sein kann, für $C_2$- bis $C_4$-Alkyl, das durch ein Hydroxy, $C_1$- bis $C_4$-Alkoxy, Phenoxy, Benzyloxy, Benzoyloxy, Benzamido, Phenylsulfamido, Mesylamino, $C_1$- bis $C_3$-Alkylcarbonyloxy, $C_1$- bis $C_4$-Alkylcarbamoyloxy, Phenylcarbamoyloxy, Chlor oder Cyan substituiert ist, oder für $C_3$- oder $C_4$-Alkyl, das durch 2 Hydroxy, Methoxy, Ethoxy, Acetoxy oder Chlor substituiert ist, wobei die Phenylreste ihrerseits durch ein Hydroxy, $C_1$- bis $C_4$-Alkoxy, $C_1$- bis $C_4$-Alkoxycarbonyl, $C_5$- oder $C_6$-Cycloalkyl, Benzyl, 2-Phenyl-propyl(2), Phenoxy, Benzyloxy, Phenylmerkapto, Phenylsulfonyl, Nitro, Cyan oder durch 1—3 Fluor, Chlor, Brom oder $C_1$- bis $C_4$-Alkyl substituiert sein können, stehen, und |

wobei mindestens einer der Reste

| | |
|---|---|
| $R^5$, $R^6$ oder $R^7$ | eine $C_1$- bis $C_4$-Alkylgruppe, die durch Phenyl oder einen der vorstehend genannten, eine Phenylgruppe enthaltenden Reste substituiert ist, bedeutet bzw. |
| $R^6$ oder $R^7$ | eine Phenylgruppe, die durch die vorstehend genannten Reste substituiert sein kann, darstellt, und |
| $Y^1$ | Wasserstoff oder Methyl ist. |

Von den Farbstoffen der Formel III sind diejenigen besonders zu nennen, worin

| | |
|---|---|
| $R^5$, $R^6$, $R^7$ | für $C_3$- oder $C_4$-Alkenyl, $C_1$- bis $C_3$-Alkyl, das durch Phenyl oder $C_1$- bis $C_4$-Alkoxycarbonyl substituiert sein kann, für $C_2$- oder $C_3$-Alkyl, das durch $C_1$- bis $C_4$-Alkoxy, Phenoxy, Benzyloxy, Benzoyloxy, $C_1$- bis $C_3$-Alkylcarbonyloxy, Phenylcarbamoyloxy, Chlor oder Cyan substituiert ist, oder für $C_3$- oder $C_4$-Alkyl, das durch 1 oder 2 Hydroxy, Methoxy, Ethoxy, Acetoxy oder Chlor substituiert ist, stehen, wobei die Phenylreste ihrerseits durch ein Hydroxy, $C_1$- bis $C_4$-Alkoxy, Cyclohexyl, Benzyl, 2-Phenyl-propyl(2), Phenoxy, Benzyloxy oder Brom oder durch 2 Chlor oder durch 1—3 $C_1$- bis $C_4$-Alkyl substituiert sein können. |

Die Herstellung der neuen Farbstoffe erfolgt in an sich bekannter Weise, indem man Quartärsalze der Formel

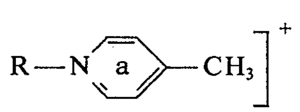

(IV)

mit Aldehyden der Formel

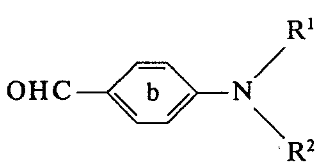

(V)

oder deren funktionellen Derivate wie Azomethine kondensiert, wobei

R, $R^1$, $R^2$, Ring a und Ring b die oben erläuterten Bedeutungen haben, und
$An'^-$ ein Anion darstellt, das von dem $An^-$ des Endfarbstoffes verschieden sein kann.

Die Kondensationen werden bei Temperaturen zwischen 20 und 140°C, vorzugsweise im Bereich 50—110°C, in einem organischen Lösungsmittel durchgeführt. Als solches eignen sich beispielsweise Alkohole, wie Methanol, Ethanol, die Propanole und Butanole, ferner Benzylalkohol, Essigsäureethylester, Bezoesäuremethylester, Ameisensäure, Essigsäure, $C_2$- bis $C_4$-Glykole, Dimethylformamid, Dimethylacetamid, Tetramethylharnstoff, Acetonitril, Benzonitril und andere. Zur Beschleunigung der Kondensationsreaktion können basische Katalysatoren zugesetzt werden, wie beispielsweise Triethylamin, Pyridin, Piperidin, N-Ethyl-piperidin, N-Methyl-morpholin, Alkalicarbonate, Alkaliacetate und Acetate anorganischer oder organischer Stickstoffbasen, wie z. B. Ammoniumacetat oder Piperidinacetat.

Die Quartärsalze der Formel IV sind aus gegebenenfalls weiter substituierten 4-Methyl-pyridinen durch Umsetzung mit Alkylierungsmitteln R—An' auf bekannte Weise und in großer Zahl zugänglich. In vielen Fällen wird zunächst eine Zwischenverbindung hergestellt, wie beispielsweise das N-Hydroxyethyl-picoliniumchlorid, die erst in einer 2. Stufe, beispielsweise durch Umsetzung mit Acylanhydriden, Isocyanaten und dergleichen, das gewünschte Ausgangsprodukt IV liefert.

Die Aldehyde der Formel V sind zumeist bekannt oder nach geläufigen Methoden zu gewinnen, indem man die entsprechenden tertiären aromatischen Amine der Formylierung unterwirft, wozu insbesondere die Reaktionen nach Vilsmeier und Haack oder nach Duff (J. Chem. Soc. (London) 1952, Seiten 1159—1164, vorteilhaft in der Ausführung gemäß DE-C-1 206 879) Anwendung finden.

Geeignete Aldehyde V werden z. B. in folgenden Veröffentlichungen beschrieben:

US-Patentschriften
2 583 551, 2 766 233, 2 850 520, 3 240 783, 3 247 211, 3 349 098, 3 386 491, 3 453 270, 3 453 280, 3 483 218, 3 504 010, 3 553 245, 3 595 863, 3 597 434, 3 631 049, 3 635 957, 3 728 374, 3 756 778, 3 844 715, 3 855 215, 3 869 495, 3 891 691, 3 909 198, 3 927 063, 3 948 938,
Deutsche Auslegeschriften 1 067 156, 1 245 005, 1 569 686, 1 813 363,
Deutsche Offenlegungsschriften
1 569 674, 1 569 678, 1 569 731, 1 959 706, 2 017 919, 2 042 498, 2 058 405, 2 114 574, 2 147 810, 2 147 811, 2 300 034, 2 316 766, 2 344 075, 2 409 464, 2 445 583, 2 446 759, 2 447 229, 2 542 376,
Schweizerische Patentschriften 435 517, 492 758, 493 596, 505 875, 505 876, 516 628,
Britische Patentschriften 1 027 026, 1 110 714, 1 257 926, 1 263 257,
Belgische Patentschriften 665 660, 703 181, 706 612, 835 291,
Niederländische Patentschrift 64. 14819,
Japanische Patentschriften 40.28 253, 49.23 224 (= US-Patentanmeldung 248 483) und
Japanische Patentanmeldungen 70/28026, 71/23508 und 71/29466.

Die erfindungsgemäßen Farbstoffe eignen sich zum Färben, Bedrucken und Massefärben von Materialien, die überwiegend oder vollständig aus Polyacrylnitril oder seinen Mischpolymerisaten mit anderen Vinylmonomeren, wie Vinylidencyanid, Vinylidenchlorid, Vinylchlorid, Vinylacetat, Vinylalkohol, Acryl- oder Methacrylester, bestehen oder aus sauer modifizierten Polyestern oder Polyamiden. Die erhaltenen brillanten goldgelben bis blaustichig roten Färbungen und Drucke, vor allem auf Polyacrylnitril, zeichnen sich durch gute Allgemeinechtheiten, insbesondere durch sehr gute Naß- und Schweißechtheiten, durch eine vorzügliche Affinität zur Faser und durch eine hohe pH-Stabilität aus.

Die Farbstoffe eignen sich ferner für die übrigen bekannten Anwendungen kationischer Farbstoffe, wie beispielsweise das Färben und Bedrucken von Celluloseacetat, Kokosfasern, Jute, Sisal, Seide und tannierter Baumwolle, Leder, zur Bereitung von Kugelschreiberpasten, unter anderem durch Fällung mit anionischen Farbstoffen, von Stempelfarben und zur Verwendung im Gummidruck.

Besonders hervorzuheben ist die ausgezeichnete Eignung der erfindungsgemäßen Farbstoffe zum Färben von geleimten und ungeleimten Papieren in der Masse in goldgelben bis blaustichig roten Tönen, wobei besonders hohe Affinitäten zur ligninhaltigen (holzschliffhaltigen) Papiermasse festgestellt werden. Ein Teil der neuen Farbstoffe zeichnet sich darüber hinaus auch durch hohe Affinitäten zu ligninfreien Papiermassen (z. B. gebleichter Sulfitzellstoff) aus, so daß derartige Papiermassen mit wesentlich verringerter Abwasseranfärbung eingefärbt werden können.

Die Farbstoffe besitzen überwiegend gute Löslichkeiten in Wasser und polaren organischen Lösungsmitteln, so daß sie zur Herstellung stabiler, hochkonzentrierter Lösungen geeignet sind.

Als polare organische Lösungsmittel kommen Essigsäure, Glykolsäure, Milchsäure, $C_2$- bis $C_4$-Glykole, Glykolmono- und -dialkylether, Glykolmono- und -diacetate, $C_1$- bis $C_4$-Alkanole, Benzylalkohol und die üblichen für die verschiedenen Anwendungsformen optimalen Solventien oder deren Mischungen in Betracht.

Beispiel 1

22 g 4,N-Dimethyl-pyridinium-methosulfat werden in 100 ml Isopropanol von 80° C gelöst, 22 g N-Ethyl-N-benzyl-4-amino-benzaldehyd und 2 g Piperidin hinzugefügt und das Gemisch 6 h unter Rühren zum Rückfluß erhitzt. Dabei färbt sich die Lösung tiefrot und es bildet sich der Farbstoff der Formel

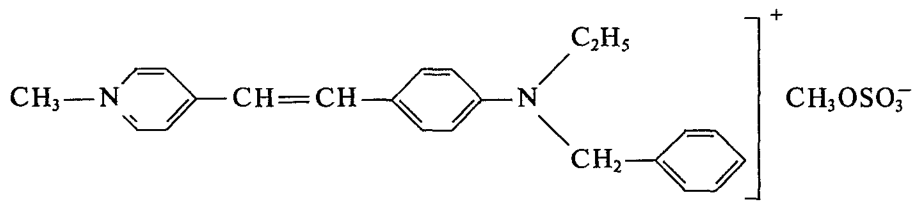

Das Produkt kristallisiert aus, wird einige Zeit nach Abkühlen der Reaktionslösung auf 0—5° C abgesaugt, mit kaltem Isopropanol gewaschen und schließlich bei 50° C im Vakuum getrocknet. Einschließlich einer Zweitfraktion aus der eingeengten Mutterlauge beträgt die Ausbeute 38 g Farbstoff in Form leuchtend roter Kristalle vom Schmelzpunkt 136—140° C, die durch Umkristallisieren aus viel Isopropanol weiter gereinigt werden können.

$\lambda_{max}$ ($H_2O$) = 460 nm.

Der erhaltene Farbstoff färbt Polyacrylnitril in außerordentlich brillantem orange Ton bei gutem Echtheitsniveau der Färbungen. Er eignet sich außerdem zur Herstellung von Stempelfarben und Kugelschreiberpasten sowie für den Gummidruck.

Bei seiner Verwendung zum Färben von holzschliffhaltigen Papiermassen wird eine hohe Affinität zur Faser und nur geringe Abwasseranfärbung festgestellt. Die gefärbten Papiere zeigen orange Nuancen sehr hoher Klarheit.

Beispiel 2

87 g 4-Methyl-N-$\beta$-hydroxyethyl-pyridiniumchlorid und 114 g N-Ethyl-N-benzyl-4-amino-benzaldehyd werden in 300 ml Isopropanol gelöst und das Gemisch nach Versetzen mit 1 g Piperidin 6 h unter Rühren auf 80—85° C erhitzt. Durch die Kondensation bildet sich der Farbstoff der Formel

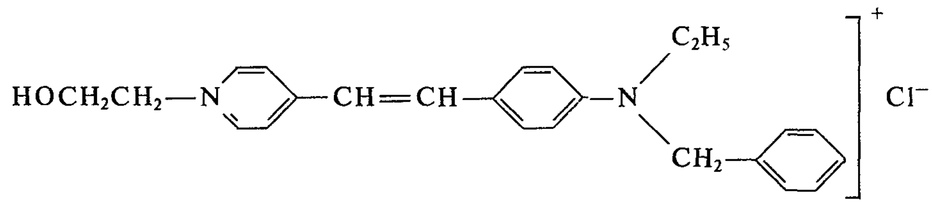

der durch anschließendes vollständiges Abdesstillieren des Lösungsmittels im Wasserstrahlvakuum als harziger rotbrauner Rückstand (ca. 200 g) erhalten wird.

Durch Auflösen des Farbharzes in gleichen Teilen Wasser resultieren 400 g einer etwa 50%igen, stabilen Farbstofflösung ($\lambda_{max}/H_2O$ = 468 nm). Die Lösung eignet sich zum Färben von Polyacrylnitril und sauer modifizierten Polyesterfasern sowie hervorragend zum Massefärben von ligninhaltigen Papiermassen in klaren orange Tönen.

Das zur Farbstoffherstellung eingesetzte 4-Methyl-N-$\beta$-hydroxyethyl-pyridiniumchlorid erhält man folgendermaßen:

Die Lösung von 81 g 2-Chlorethanol in 500 ml trockenem Toluol wird bei 100° C mit 99 g $\gamma$-Picolin (96% Reinheit) versetzt und das Reaktionsgemisch 15 h zum Rückfluß erhitzt (Innentemperatur ca. 112—114° C). Das auskristallisierte Quartärsalz wird nach Erkalten des Ansatzes abgesaugt, mit trockenem Toluol gewaschen und bei 80° C im Vakuum getrocknet. Ausbeute: 140 g vom Schmelzpunkt 96—98° C.

Das Produkt ist sehr hygroskopisch. Seine Herstellung gelingt auch ohne Solvens bei 80—140° C.

Durch Verwendung entsprechender Ausgangsmaterialien erhält man analog zu den vorstehenden Beispielen weitere erfindungsgemäße Farbstoffe der Formel

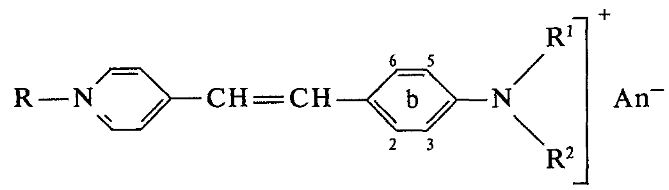

mit vergleichbaren coloristischen Eigenschaften beim Färben der oben genannten Materialien, insbesondere von Polyacrylnitril, sauer modifizierten Polyestern und Polyamiden und vorzugsweise von geleimten und ungeleimten Papierstoffen in der Masse, wobei die Abwässer nur geringe Färbungen aufweisen. Eine Auswahl ist einschließlich Farbton des in der Masse gefärbten Papiers in den folgenden Tabellen zusammengestellt.

Tabelle 1

| Beispiel Nr. | R | Substituent in Ring b | $R^1$ | $R^2$ | Farbton des Papieres bei Massefärbungen |
|---|---|---|---|---|---|
| 3 | $CH_3$ | – | $CH_3$ | $CH_2C_6H_5$ | orange |
| 4 | $CH_3$ | 2-$CH_3$ | $C_2H_5$ | $CH_2C_6H_5$ | gelborange |
| 5 | $CH_3$ | 2-$CH_3$ | $CH_3$ | $CH_2C_6H_5$ | gelborange |
| 6 | $CH_3$ | – | $C_2H_4Cl$ | $CH_2C_6H_5$ | orange |
| 7 | $CH_3$ | – | $C_2H_4CN$ | $CH_2C_6H_5$ | orangegelb |
| 8 | $CH_3$ | 2-$CH_3$ | $C_2H_4Cl$ | $CH_2CH_2C_6H_5$ | rotorange |
| 9 | $CH_3$ | 2-$CH_3$ | $C_2H_4CN$ | $CH_2CH_2C_6H_5$ | goldgelb |
| 10 | $CH_3$ | – | $C_2H_4CN$ | $CH_2CH_2C_6H_5$ | orangegelb |
| 11 | $CH_3$ | – | $C_2H_4Cl$ | $CH_2CH_2C_6H_5$ | gelborange |
| 12 | $CH_3$ | – | $C_2H_5$ | $C_2H_4OC_6H_4C_6H_5$(p) | orange |
| 13 | $C_2H_5$ | – | $C_2H_5$ | $CH_2C_6H_5$ | rotorange |
| 14 | $CH_2{=}CH{-}CH_2$ | – | $C_2H_5$ | $CH_2C_6H_5$ | bordeaux |
| 15 | $HOCH_2CH_2$ | 2-$CH_3$ | $C_2H_5$ | $CH_2C_6H_5$ | orangerot |
| 16 | $HOCH_2CH_2$ | 2,5-di-$OCH_3$ | $CH_3$ | $CH_2C_6H_5$ | orange |
| 17 | $HOCH_2CH_2$ | 2-Cl | $CH_3$ | $CH_2C_6H_5$ | orange |
| 18 | $HOCH_2CH_2$ | – | $C_2H_4Cl$ | $CH_2C_6H_5$ | orange |
| 19 | $HOCH_2CH_2$ | – | $C_2H_4CN$ | $CH_2C_6H_5$ | orangegelb |
| 20 | $HOCH_2CH_2$ | – | $C_2H_4Cl$ | $CH_2CH_2C_6H_5$ | gelborange |

Fortsetzung

| Beispiel Nr. | R | Substituent in Ring b | $R^1$ | $R^2$ | Farbton des Papieres bei Massefärbungen |
|---|---|---|---|---|---|
| 21 | $HOCH_2CH_2$ | – | $C_2H_4CN$ | $CH_2CH_2C_6H_5$ | orangegelb |
| 22 | $HOCH_2CH_2$ | – | $C_2H_4COOC_2H_5$ | $CH_2CH_2C_6H_5$ | orangegelb |
| 23 | $HOCH_2CH_2$ | – | $C_4H_9$ | $CH_2C_6H_5$ | orange |
| 24 | $HOCH_2CH_2$ | – | $C_2H_5$ | $C_2H_4OC_6H_4C_6H_5$(p) | rotorange |
| 25 | $HOCH_2CH_2$ | – | $C_2H_5$ | $C_2H_4OC_6H_4$— 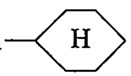 (p) | rotorange |
| 26 | $HOCH_2CH_2$ | 2-$CH_3$ | $C_2H_5$ | $C_2H_4OC_6H_4C_6H_5$(p) | rotorange |
| 27 | $HOCH_2CH_2$ | 2-$CH_3$ | $C_2H_5$ | $C_2H_4OC_6H_4CH_3$(p) | orange |
| 28 | $HOCH_2CH_2$ | 2-$CH_3$ | $C_2H_5$ | $C_2H_4OC_6H_4Cl$(p) | orange |
| 29 | $HOCH_2CH_2$ | 2-$CH_3$ | $C_2H_5$ | $C_2H_4OC_6H_4COOCH_3$(p) | orange |
| 30 | $HOCH_2CH_2$ | – | $C_2H_4OCH_3$ | $CH_2C_6H_5$ | orange |
| 31 | $HOCH_2CH_2$ | – | $CH_3$ | $C_2H_4OC_6H_5$ | orange |
| 32 | $HOCH_2CH_2$ | 2-$CH_3$ | $C_2H_5$ | $C_2H_4OC_6H_5$ | rotorange |
| 33 | $HOCH_2CH_2$ | 2-$CH_3$ | $C_2H_5$ | $C_2H_4OCH_2C_6H_5$ | rotorange |
| 34 | $HOCH_2CH_2$ | 2-$CH_3$ | $C_2H_5$ | $C_2H_4OCH_2C_6H_4Cl$(p) | rotorange |
| 35 | $HOCH_2CH_2$ | 2-$CH_3$ | $C_2H_5$ | $C_2H_4OCOC_6H_5$ | rotorange |
| 36 | $HOCH_2CH_2$ | 2-$CH_3$ | $C_2H_5$ | $C_2H_4OCONHC_6H_5$ | rotorange |
| 37 | $HOCH_2CH_2$ | 2-$CH_3$ | $C_2H_5$ | $C_2H_4OCOC_6H_4Cl$(o) | rotorange |
| 38 | $HOCH_2CH_2$ | 2-$CH_3$ | $C_2H_5$ | $C_2H_4OC_6H_4$—tert.-$C_4H_9$(p) | rotorange |

Fortsetzung

| Beispiel Nr. | R | Substituent in Ring b | $R^1$ | $R^2$ | Farbton des Papieres bei Massefärbungen |
|---|---|---|---|---|---|
| 39 | $HOCH_2CH_2$ | 2-$CH_3$ | $C_2H_5$ | $C_2H_4OCOCH_2C_6H_5$ | rotorange |
| 40 | $HOCH_2CH_2$ | 2-$CH_3$ | $C_2H_5$ | $CH_2CH(CH_3)OC_6H_5$ | rotorange |
| 41 | $HOCH_2CH_2$ | 2-$CH_3$ | $C_2H_5$ | $C_2H_4SC_6H_5$ | rotorange |
| 42 | $HOCH_2CH_2$ | 2-$CH_3$ | $C_2H_5$ | $C_2H_4SO_2C_6H_5$ | rotorange |
| 43 | $HOCH_2CH_2$ | 2-$CH_3$ | $C_2H_5$ | $C_2H_4NHCOC_6H_5$ | rotorange |
| 44 | $HOCH_2CH_2$ | 2-$CH_3$ | $C_2H_5$ | $C_2H_4OC_6H_4OC_6H_5$(p) | rotorange |
| 45 | $HOCH_2CHOHCH_2$ | – | $C_2H_5$ | $C_2H_4OC_6H_4C_6H_5$(p) | rotorange |
| 46 | $HOCH_2CHOHCH_2$ | 2-$CH_3$ | $C_2H_5$ | $C_2H_4OC_6H_4C_6H_5$(p) | orangerot |
| 47 | $CH_3COOC_2H_4$ | 2-$CH_3$ | $C_2H_5$ | $CH_2C_6H_5$ | orangerot |
| 47a | $HOCH(CH_3)CH_2^-$ | – | $C_2H_5$ | $CH_2C_6H_5$ | orange |

Beispiel 48

11 g N-Benzyl-$\gamma$-picoliniumchlorid und 7,5 g 4-Dimethylamino-benzaldehyd werden in 30 ml Isopropanol unter Zusatz von 0,5 g Piperidin 6 h zum Rückfluß erhitzt. Nach Erkalten rührt man noch einige Stunden bei Raumtemperatur nach und isoliert das auskristallisierte Produkt durch Absaugen, Waschen mit Toluol und Trocknen bei 50°C im Vakuum. Ausbeute: 10,5 g rote Kristalle vom Schmelzbereich 232—248°C.

$\lambda_{max}/CH_3OH$ = 486 nm.

Der Farbstoff entspricht der Formel

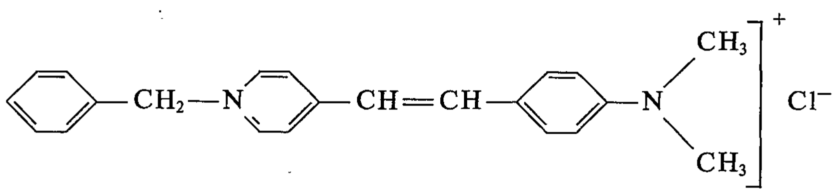

und eignet sich zum Färben sauer modifizierter Synthesefasern, insbesondere aber zum Färben ungeleimter und geleimter Papierstoffe in der Masse und verleiht ihnen brillante orangerote Töne. Die Abwasseranfärbung bei der Papierfärbung bleibt auffallend gering.

Beispiel 49

Eine Lösung von 46,7 g 4-Methyl-N-$\beta$-phenylethyl-pyridiniumchlorid in 60 ml Isopropanol wird mit 26,6 g 4-Diethylamino-benzaldehyd und 4 ml Piperidin versetzt, 4 h auf 80°C und nach Zugabe eines weiteren ml Piperidin noch 3 h auf 90°C erhitzt. Danach destilliert man das Lösungsmittel unter reduziertem Druck vollständig ab und nimmt den harzigen Rückstand (ca. 70 g), der aus dem Farbstoff der Formel

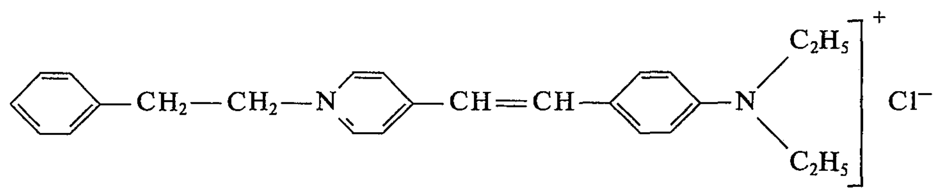

$\lambda_{max}$ ($H_2O$) = 476 nm

besteht, unter leichtem Erwärmen in 160 g eines Gemisches von Essigsäure und 80%iger wäßriger Milchsäure (7 : 3 W/W) auf. Man erhält eine klare, ca. 30%ige Farbstofflösung, die in jedem Verhältnis mit Wasser verdünnbar ist und holzschliffhaltigem Papier bei der Massefärbung eine brillante rote Färbung verleiht, ohne das Abwasser stark anzufärben.

Das als Ausgangssubstanz dienende Phenethyl-$\gamma$-picoliniumchlorid wird in roher, bräunlicher Form durch 8stündiges Erwärmen eines Gemisches von 70,3 g $\beta$-Phenylethylchlorid und 47,5 g $\gamma$-Picolin auf 120—125°C und nachfolgendes Abdestillieren überschüssigen $\gamma$-Picolins bei 20 mbar/120°C in praktisch quantitativer Ausbeute erhalten.

Auf analoge Weise wie in den vorstehenden Beispielen gewinnt man bei Verwendung der entsprechenden Ausgangssubstanzen weitere erfindungsgemäße Farbstoffe der Formel

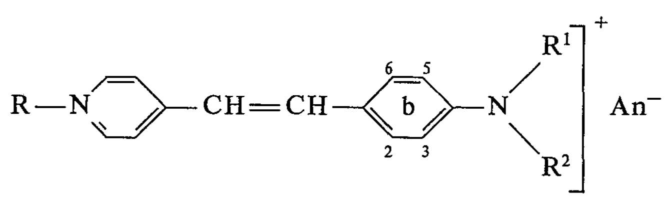

mit vergleichbaren coloristischen Eigenschaften beim Färben der oben genannten Fasermaterialien, wie Polyacrylnitril und sauer modifizierter Polyester, und vorzugsweise von ungeleimten und geleimten Papierstoffen in der Masse, wobei die Abwässer nur geringfügig gefärbt erscheinen. Eine Auswahl von im Rest R einen Arylrest tragenden Farbstoffen ist nebst Farbton des damit in der Masse eingefärbten Papiers in der folgenden Tabelle 2 aufgeführt.

| Beispiel Nr. | R | Subst. in Ring b | $R^1$ | $R^2$ | Farbton des Papiers bei Massefärbung |
|---|---|---|---|---|---|
| 50 | $C_6H_5CH_2$ | – | $C_2H_5$ | $C_2H_5$ | blaustichig rot |
| 51 | $C_6H_5CH_2$ | 2-$CH_3$ | $C_2H_5$ | $C_2H_5$ | blaustichig rot |
| 52 | $C_6H_5CH_2$ | 2-$CH_3$ | $CH_3$ | $CH_3$ | rot |
| 53 | $C_6H_5CH_2$ | – | $C_2H_4O$ | $C_2H_4$ | rotorange |
| 54 | $C_6H_5CH_2$ | – | $CH_3$ | $C_2H_4Cl$ | rot |
| 55 | $C_6H_5CH_2$ | – | $C_2H_5$ | $C_2H_4OCOCH_3$ | rot |
| 56 | $C_6H_5CH_2$ | – | $CH_3$ | $C_2H_4CN$ | rot |
| 57 | $C_6H_5CH_2$ | – | $C_2H_5$ | $CH_2C_6H_5$ | blaustichig rot |
| 58 | $C_6H_5CH_2$ | – | $C_2H_5$ | $C_2H_4OCH_3$ | rot |
| 59 | $C_6H_5CH_2$ | – | $C_2H_5$ | $C_2H_4OH$ | rot |
| 60 | $C_6H_5CH_2$ | – | $C_2H_5$ | $C_3H_6NHCOCH_3$ | rot |
| 61 | p-$ClC_6H_4CH_2$ | – | $CH_3$ | $CH_3$ | rot |
| 62 | $C_6H_5CH_2CH_2$ | – | $CH_3$ | $CH_3$ | rot |
| 63 | desgl. | 2-$CH_3$ | $C_2H_5$ | $C_2H_5$ | blaustichig rot |
| 64 | $C_6H_5OCH_2CH_2$ | – | $C_2H_5$ | $C_2H_5$ | rot |
| 65 | desgl. | – | $CH_3$ | $CH_3$ | rot |
| 66 | desgl. | 2-$CH_3$ | $C_2H_5$ | $C_2H_5$ | blaustichig rot |
| 67 | p-$CH_3C_6H_4OCH_2CH_2$ | – | $C_2H_5$ | $C_2H_5$ | rot |
| 68 | $C_6H_5COOCH_2CH_2$ | – | $C_2H_5$ | $C_2H_5$ | rot |
| 69 | $C_6H_5NHCOOCH_2CH_2$ | – | $C_2H_5$ | $C_2H_5$ | rot |

Beispiel 70

In ein wäßriges Färbebad, das pro 1000 ml 0,75 g 30%ige Essigsäure, 0,38 g Natriumacetat und 0,15 g des in Beispiel 1 beschriebenen Farbstoffes enthält, bringt man bei 40°C die dem Flottenverhältnis 1 : 40 entsprechende Menge Polyacrylnitrilfaser ein, erhitzt innerhalb von 20—30 min zum Sieden und färbt 30—60 min bei Siedetemperatur. Das anschließend gespülte und getrocknete Färbegut weist eine brillante, orange Färbung auf, die sich allgemein durch gute Echtheiten, insbesondere durch sehr gute Wasch- und Dekaturechtheit auszeichnet.

Färbt man mit dem gleichen Farbstoff unter den Bedingungen des sogenannten NEOCHROM-Prozesses naßgesponnene Polyacrylnitrilfasern, so erhält man ebenfalls Färbungen von vergleichbar hohem Echtheitsniveau.

Beispiel 71

Eine aus 15 g des Farbstoffes gemäß Beispiel 12, 15 g Polyacrylnitril und 70 g Dimethylformamid bereitete Stammlösung wird einer üblichen Spinnlösung von Polyacrylnitril in der gewünschten Menge zugesetzt und die gefärbte Lösung in bekannter Weise versponnen. Es resultieren Polyacrylnitrilfäden von klarer orange Färbung, die gute Echtheitseigenschaften aufweisen, insbesondere sehr gute Wasch- und Dekaturechtheiten.

## Beispiel 72

Ein Gewebe aus Polyacrylnitril wird mit einer Druckpaste der folgenden Zusammensetzung bedruckt:

30 g des in Beispiel 48 beschriebenen Farbstoffes,
50 g Thiodiethylenglykol,
30 g Cyclohexanol,
30 g 30%ige Essigsäure,
500 g Kristallgummi,
30 g wäßrige Zinknitratlösung (d = 1,5 $gcm^{-3}$) und
330 g Wasser.

Der erhaltene rote Druck wird getrocknet, 30 min gedämpft und anschließend gespült. Er zeichnet sich durch gute Echtheitseigenschaften aus.

## Beispiel 73

Sauer modifizierte Polyglykolterephthalatfasern (z. B. solche die in der belgischen Patentschrift 549 179 und in der US-Patentschrift 2 893 816 beschrieben sind) werden bei 20°C und einem Flottenverhältnis 1 : 40 in ein Färbebad gegeben, das pro 1000 ml 3—10 g Natriumsulfat, 0,1—2 g Oleylpolyglykolether (enth. 50 mol Ethylenoxid), 0—15 g Dimethylbenzyl-dodecylammoniumchlorid und 0,3 g Farbstoff gemäß Beispiel 9 enthält und mit Essigsäure bzw. Natriumacetat auf einen pH-Wert von 4,5—5,5 eingestellt wurde. Man erhitzt innerhalb von 30 min auf 98°C und hält das Bad 60 min bei dieser Temperatur. Nach dem anschließenden Spülen und Trocknen der Fasern weisen diese eine brillante goldgelbe Färbung mit guten Echtheitseigenschaften auf.

## Beispiel 74

In einem Färbebecher von 500 ml Inhalt, der sich in einem beheizten Wasserbad befindet, werden 0,15 g der Farbstofflösung gemäß Beispiel 15 nach Zusatz von 0,5 g Oleylpolyglykolether (enth. 50 mol Ethylenoxid) mit Wasser auf 500 ml aufgefüllt und der pH-Wert der Färbeflotte auf 4,5—5 eingestellt. In dieser Flotte werden 10 g Stückware aus sauer modifiziertem Polyamid ständig bewegt, während die Badtemperatur binnen 15 min auf 100°C erhöht wird. Nach 15—20minütigem Färben bei Kochtemperatur wird das gefärbte Gut gespült und getrocknet, z. B. durch Bügeln oder bei 60—70°C im Trockenschrank. Man erhält eine klare, rotorange Färbung mit guten Echtheitseigenschaften.

## Beispiel 75

Ein aus 60% Holzschliff und 40% ungebleichtem Sulfitzellstoff bestehender Trockenstoff wird im Holländer mit so viel Wasser angeschlagen und bis zum Mahlgrad 40° SR gemahlen, daß der Trockengehalt etwas über 2,5% liegt, und anschließend mit Wasser auf exakt 2,5% Trockengehalt des Dickstoffes eingestellt.

200 g dieses Dickstoffes werden mit 5 g einer 0,25%igen wäßrigen Lösung des Farbstoffes gemäß Beispiel 2 versetzt, ca. 5 min verrührt, 2% Harzleim und 4% Alaun, bezogen auf Trockenstoff, hinzugegeben und wiederum einige Minuten homogen verrührt. Man verdünnt die Masse mit ca. 500 g Wasser auf 700 ml und stellt hieraus in bekannter Weise durch Absaugen über einen Blattbildner Papierblätter her. Sie weisen eine brillante orange Färbung auf. Im Abwasser des Blattbildners ermittelt man photometrisch (bei $\lambda_{max}$ = 470 nm) die Menge des nicht an Papier gebundenen Farbstoffes zu ca. 3%. Beim Färben ungeleimter Papiermassen werden bei sonst gleicher Verfahrensweise ebenfalls ca. 3% nicht fixierten Farbstoffes festgestellt.

Ähnlich geringe Abwasseranfärbungen zeigen unter obigen Arbeitsbedingungen praktisch alle erfindunsgemäßen Farbstoffe.

## Beispiel 76

200 g eines analog Beispiel 75, jedoch ausschließlich unter Verwendung von gebleichtem Sulfitzellstoff bereiteten 2,5%igen Dickstoffes (Mahlgrad 35° SR) werden mit 5 g einer 0,5%igen wäßrigen Lösung des Farbstoffes von Beispiel 26 versetzt und ohne Zusatz von Harzleim und Alaun zu Papier verarbeitet. Man erhält ein in kräftigem, rotorange Ton eingefärbtes Blattpapier. Das Abwasser enthält lt. photometrischer Bestimmung nur ca. 14% des eingesetzten Farbstoffes. Erfolgt die

Einfärbung der Papiermasse in Gegenwart von 2% Harzleim und 4% Alaun (vgl. Beispiel 75), so erhält man ein ähnliches Ergebnis, und nur ca. 5% des Farbstoffes verbleiben im Abwasser.

Beispiel 77

21 g N-Methyl-N-phenyl-4-amino-benzaldehyd und 19 g 4-Methyl-N-$\beta$-hydroxyethyl-pyridinium-chlorid werden in 50 ml Isopropanol gelöst und nach Zugabe von 1 g Piperidin 6 h auf 80° C erhitzt. Anschließend entfernt man das Lösungsmittel durch Abdestillieren bei reduziertem Druck und erhält ca. 40 g Farbharz, das mit 40 g Wasser versetzt wird und nach 0,5stündigem Verrühren bei 80° C ca. 80 g einer etwa 50%igen Lösung ($\lambda_{max}$ in $H_2O$ = 454 nm) des Farbstoffs der Formel

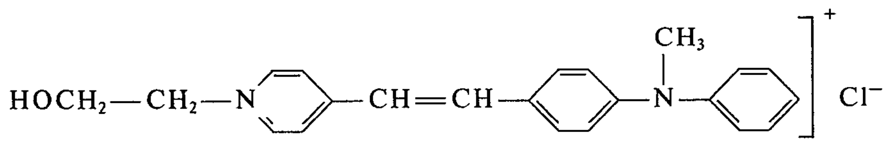

ergibt. Der Farbstoff färbt holzschliffhaltige Papiermassen bei der Verwendung analog Beispiel 75 in äußerst klaren orangegelben Tönen bei nur geringer Abwasseranfärbung.

Beispiel 78

Setzt man anstelle des im vorangehenden Beispiel verwendeten Aldehyds 25,5 N-Methyl-N-p-phenetidyl-4-amino-benzaldehyd ein, so erhält man entsprechend ca. 90 g einer etwa 50%igen wäßrigen Einstellung des Farbstoffs der Formel

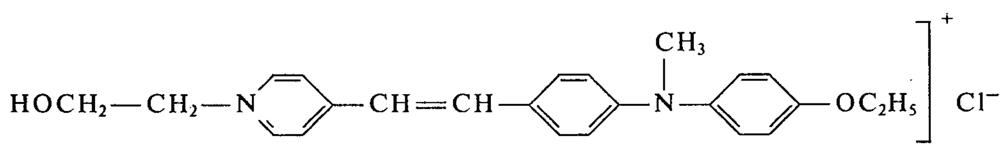

der dem Farbstoff des Beispiels 77 in Nuance und coloristischen Eigenschaften weitgehend entspricht.

**Patentansprüche**

1. Styrylfarbstoffe der allgemeinen Formel

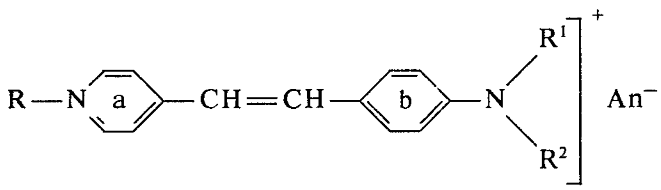

worin

| | |
|---|---|
| R | einen niederen Alkyl- oder Alkenylrest und |
| $R^1$ und $R^2$ | niedere Alkyl- oder Alkenylreste bezeichnen, die gemeinsam mit dem Stickstoffatom, an das sie gebunden sind, einen 5- oder 6gliedrigen heterocyclischen Ring bilden können, und |

worin

| | |
|---|---|
| R, $R^1$ und $R^2$ | durch nichtionische Reste substituiert sein können und mindestens einer der Reste |
| R, $R^1$ und $R^2$ | direkt oder über eine Brücke durch einen Arylrest substituiert ist oder einer der Reste |
| $R^1$ oder $R^2$ | einen Arylrest darstellt, |
| Ring a | durch 1 bis 2 Methyl oder Ethyl, |
| Ring b | durch 1 bis 2 Methyl, Ethyl, Methoxy oder Ethoxy oder durch 1 Halogen substituiert sein kann und |
| $An^-$ | für ein Anion steht. |

2. Farbstoffe der Formel des Anspruchs 1, worin

R — einen niederen Alkyl- oder Alkenylrest darstellt, oder direkt oder über eine Brücke durch einen Arylrest substituiert ist.

3. Farbstoffe der Formel des Anspruchs 1, worin

$R^1$ und/oder $R^2$ — unabhängig voneinander einen niederen Alkyl- oder Alkenylrest, der direkt oder über eine Brücke durch einen Arylrest substituiert ist, oder einen Arylrest darstellen.

4. Farbstoffe gemäß den Ansprüchen 1—3 der allgemeinen Formel

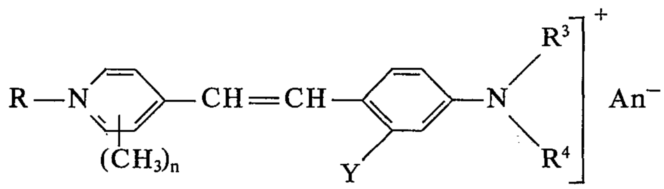

worin

$An^-$ — die in Anspruch 1 angegebene Bedeutung besitzt,
R, $R^3$ und $R^4$ — niedere Alkyl- oder Alkenylreste darstellen, die durch nichtionische Reste substituiert sein können, und mindestens einer dieser Reste direkt oder über eine Brücke durch einen Arylrest substituiert ist bzw. einer der Reste
$R^3$ oder $R^4$ — einen Arylrest bedeutet,
n — 0 bis 2 und
Y — H, $CH_3$, $OCH_3$, $OC_2H_5$ oder Cl ist.

5. Farbstoffe gemäß den Ansprüchen 1—3 der allgemeinen Formel

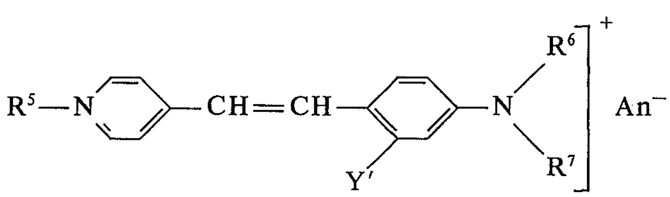

worin

$An^-$ — die oben angegebene Bedeutung besitzt,
$R^5$, $R^6$ und $R^7$ — für $C_1$- bis $C_4$-Alkyl, das durch Phenyl oder $C_1$- bis $C_4$-Alkoxycarbonyl substituiert sein kann, $C_3$- oder $C_4$-Alkenyl, das durch Phenyl substituiert sein kann, für $C_2$- bis $C_4$-Alkyl, das durch ein Hydroxy, $C_1$- bis $C_4$-Alkoxy, Phenoxy, Benzyloxy, Benzoyloxy, Benzamido, Phenylsulfamido, Mesylamino, $C_1$- bis $C_3$-Alkylcarbonyloxy, $C_1$- bis $C_4$-Alkylcarbamoyloxy, Phenylcarbamoyloxy, Chlor oder Cyan substituiert ist, oder für $C_3$- oder $C_4$-Alkyl, das durch 2 Hydroxy, Methoxy, Ethoxy, Acetoxy oder Chlor substituiert ist, wobei die Phenylreste ihrerseits durch ein Hydroxy, $C_1$- bis $C_4$-Alkoxy, $C_1$- bis $C_4$-Alkoxycarbonyl, $C_5$- oder $C_6$-Cycloalkyl, Benzyl, 2-Phenyl-propyl(2), Phenoxy, Benzyloxy, Phenylmerkapto, Phenylsulfonyl, Nitro, Cyan oder durch 1—3 Fluor, Chlor, Brom oder $C_1$- bis $C_4$-Alkyl substituiert sein können, stehen, und

wobei mindestens einer der Reste

$R^5$, $R^6$ oder $R^7$ — eine $C_1$- bis $C_4$-Alkylgruppe, die durch Phenyl oder einen der vorstehend genannten, eine Phenylgruppe enthaltenden Reste substituiert ist, bedeutet bzw.
$R^6$ oder $R^7$ — eine Phenylgruppe, die durch die vorstehend genannten Reste substituiert sein kann, darstellt, und
Y' — Wasserstoff oder Methyl ist.

6. Farbstoffe der Formel des Anspruchs 5, worin

$R^5$, $R^6$, $R^7$ — für $C_3$- oder $C_4$-Alkenyl, $C_1$- bis $C_3$-Alkyl, das durch Phenyl oder $C_1$- bis $C_4$-Alkoxycarbonyl substituiert sein kann, für $C_2$- oder $C_3$-Alkyl, das durch $C_1$- bis $C_4$-Alkoxy, Phenoxy, Benzyloxy, Benzoyloxy, $C_1$- bis $C_3$-Alkylcarbonyloxy, Phenylcarb-

amoyloxy, Chlor oder Cyan substituiert ist, oder für $C_3$- oder $C_4$-Alkyl, das durch 1 oder 2 Hydroxy, Methoxy, Ethoxy, Acetoxy oder Chlor substituiert ist, stehen, wobei die Phenylreste ihrerseits durch ein Hydroxy, $C_1$- bis $C_4$-Alkoxy, Cyclohexyl, Benzyl, 2-Phenyl-propyl(2), Phenoxy, Benzyloxy oder Brom oder durch 2 Chlor oder durch 1—3 $C_1$- bis $C_4$-Alkyl substituiert sein können.

7. Verfahren zur Herstellung von Farbstoffen gemäß Anspruch 1, dadurch gekennzeichnet, daß man Quartärsalze der Formel

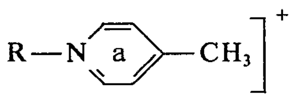 $An'^-$

worin

R und Ring a die in Anspruch 1 erläuterte Bedeutung haben und
$An'^-$ ein Anion darstellt, das von dem $An^-$ des Endfarbstoffes verschieden sein kann,

mit Aldehyden der Formel

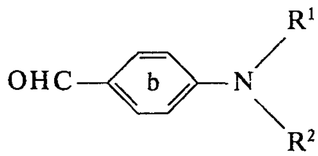

worin

$R^1$, $R^2$ und Ring b die in Anspruch 1 angegebene Bedeutung haben,

kondensiert.

8. Verfahren nach Anspruch 7, dadurch gekennzeichnet, daß man die Kondensation in einem organischen Lösungsmittel bei Temperaturen zwischen 20 und 140° C durchführt.

9. Verfahren gemäß Anspruch 8, dadurch gekennzeichnet, daß man die Kondensation in Gegenwart eines basischen Katalysators durchführt.

10. Verwendung der Verbindungen gemäß Anspruch 1 zum Färben, Bedrucken und Massefärben von Polyacrylnitril, sauer modifizierten Polyestern und Polyamiden, Celluloseacetat, Kokosfasern, Jute, Sisal, Seide, tannierter Baumwolle, Leder, geleimten und ungeleimten Papieren sowie zur Bereitung von Kugelschreiberpasten und von Stempelfarben und im Gummidruck.

## Claims

1. Styryl dyestuffs of the general formula

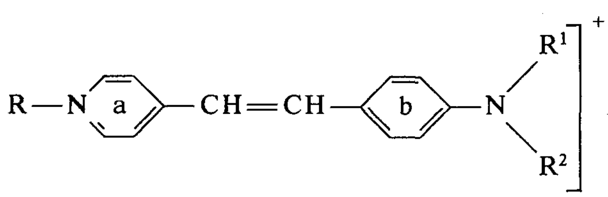 $An^-$

wherein

R designates a lower alkyl or alkenyl radical and
$R^1$ and $R^2$ designate lower alkyl or alkenyl radicals which, together with the nitrogen atom to which they are bonded, can form a 5-membered or 6-membered heterocyclic ring,

and wherein

R, $R^1$ and $R^2$ can be substituted by non-ionic radicals, and
at least one of the radicals R, $R^1$ and $R^2$ is substituted by an aryl radical, directly or via a bridge, or one of the radicals $R^1$ or $R^2$ represents an aryl radical,
the ring a can be substituted by 1 or 2 methyl or ethyl radicals,

the ring b can be substituted by 1 or 2 methyl, ethyl, methoxy or ethoxy radicals or by 1 halogen atom and
An⁻ represents an anion.

2. Dyestuffs of the formula of Claim 1,
wherein

R represents a lower alkyl or alkenyl radical which is substituted by an aryl radical, directly or via a bridge.

3. Dyestuffs of the formula of Claims 1,
wherein

$R^1$ and/or $R^2$ independently of one another represent a lower alkyl or alkenyl radical which is substituted by an aryl radical, directly or via a bridge, or an aryl radical.

4. Dyestuffs according to Claims 1—3, of the general formula

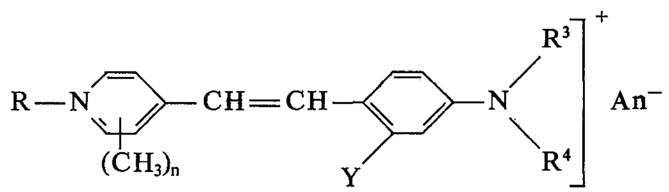

wherein

An⁻ has the meaning given in Claim 1,
R, $R^3$ and $R^4$ represent lower alkyl or alkenyl radicals which can be substituted by non-ionic radicals,

and wherein

at least one of these radicals is substituted by an aryl radical, directly or via a bridge, or one of the radicals $R^3$ or $R^4$ denotes an aryl radical,
n is a number from 0 to 2 and
Y is H, $CH_3$, $OCH_3$, $OC_2H_5$ or Cl.

5. Dyestuffs according to Claims 1—3, of the general formula

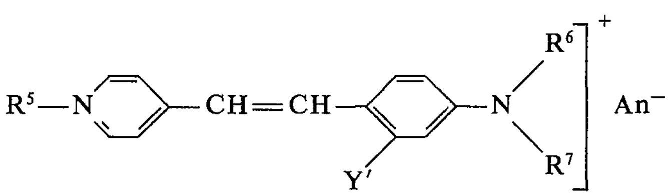

wherein

An⁻ has the abovementioned meaning,
$R^5$, $R^6$ and $R^7$ represent $C_1$- to $C_4$-alkyl, which can be substituted by phenyl or $C_1$- to $C_4$-alkoxycarbonyl, $C_3$- or $C_4$-alkenyl, which can be substituted by phenyl, $C_2$- to $C_4$-alkyl, which is substituted by hydroxyl, $C_1$- to $C_4$-alkoxy, phenoxy, benzyloxy, benzoyloxy, benzamido, phenylsulphamido, mesylamino, $C_1$- to $C_3$-alkylcarbonyloxy, $C_1$- to $C_4$-alkylcarbamoyloxy, phenylcarbamoyloxy, chlorine or cyano, or $C_3$- or $C_4$-alkyl, which is substituted by 2 hydroxyl, methoxy, ethoxy or acetoxy radicals or chlorine atoms, it being possible for the phenyl radicals in turn to be substituted by one hydroxyl, $C_1$- to $C_4$-alkoxy, $C_1$- to $C_4$-alkoxycarbonyl, $C_5$- or $C_6$-cycloalkyl, benzyl, 2-phenyl-prop-2-yl, phenoxy, benzyloxy, phenylmercapto, phenylsulphonyl, nitro or cyano radical or by 1—3 fluorine, chlorine or bromine atoms or $C_1$- to $C_4$-alkyl radicals,

and wherein

at least one of the radicals $R^5$, $R^6$ or $R^7$ denotes a $C_1$- to $C_4$-alkyl group which is substituted by phenyl or one of the abovementioned radicals containing a phenyl group, or

$R^6$ or $R^7$ represents a phenyl group, which can be substituted by the abovementioned radicals, and Y′ is hydrogen or methyl.

6. Dyestuffs of the formula of Claim 5, wherein

$R^5$, $R^6$ and $R^7$ represent $C_3$- or $C_4$-alkenyl, $C_1$- to $C_3$-alkyl, which can be substituted by phenyl or $C_1$- to $C_4$-alkoxycarbonyl, $C_2$- or $C_3$-alkyl, which is substituted by $C_1$- to $C_4$-alkoxy, phenoxy, benzyloxy, benzoyloxy, $C_1$- to $C_3$-alkylcarbonyloxy, phenylcarbamoyloxy, chlorine or cyano, or $C_3$- or $C_4$-alkyl, which is substituted by 1 or 2 hydroxyl, methoxy, ethoxy or acetoxy groups or chlorine atoms, it being possible for the phenyl radicals in turn to be substituted by one hydroxyl, $C_1$- to $C_4$-alkoxy, cyclohexyl, benzyl, 2-phenyl-prop-2-yl, phenoxy or benzyloxy radical or bromine atom, by 2 chlorine atoms or by 1—3 $C_1$- to $C_4$-alkyl radicals.

7. Process for the preparation of dyestuffs according to Claim 1, characterised in that quaternary salts of the formula

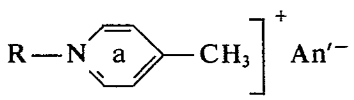

wherein

R and the ring a have the meaning given in Claim 1 and
An′⁻ represents an anion, which can differ from the An⁻ of the end dyestuff,

are subjected to a condensation reaction with aldehydes of the formula

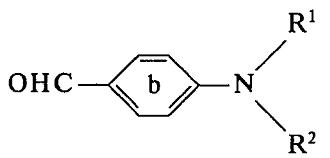

wherein

$R^1$, $R^2$ and the ring b have the meaning given in Claim 1.

8. Process according to Claim 7, characterised in that the condensation reaction is carried out in an organic solvent, at temperatures between 20 and 140° C.

9. Process according to Claim 8, characterised in that the condensation reaction is carried out in the presence of a basic catalyst.

10. Use of the compounds according to Claim 1 for dyeing, printing and bulk-dyeing polyacrylonitrile, acid-modified polyesters and polyamides, cellulose acetate, coir fibres, jute, sisal, silk, tannin-treated cotton, leather and sized and unsized paper and for the preparation of ball-point pen pastes and rubber-stamp inks, and in flexographic printing.

**Revendications**

1. Colorants styryliques de formule générale:

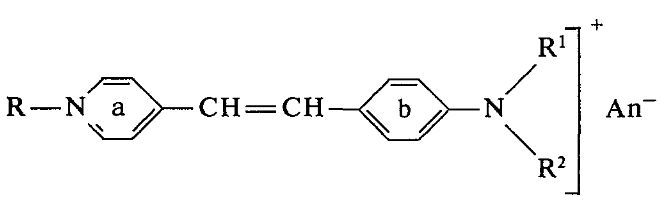

dans laquelle

| | |
|---|---|
| R | représente un radical alcoyle ou alcényle inférieur et |
| $R^1$ et $R^2$ | désignent des radicaux alcoyle ou alcényle inférieur qui, en commun avec l'atome d'azote auquel ils sont attachés, peuvent former un noyau hétérocyclique à 5 ou 6 chaînons, et |

dans laquelle

| | |
|---|---|
| R, $R^1$ et $R^2$ | peuvent être substitués par des radicaux non ioniques et où au moins un des radicaux |
| R, $R^1$ et $R^2$ | est directement substitué ou par l'intermédiaire d'un pont par un radical aryle, ou bien un des radicaux |
| $R^1$ ou $R^2$ | constitue un radical aryle, |
| le noyau a | peut être substitué par 1 à 2 méthyle ou éthyle, |
| le noyau b | par 1 à 2 méthyle, éthyle, méthoxy ou éthoxy ou par 1 halogène et |
| $An^-$ | représente un anion. |

2. Colorants de formule selon la revendication 1, dans laquelle

| | |
|---|---|
| R | représente un radical alcoyle ou alcényle inférieur ou est substitué directement ou par l'intermédiaire d'un pont par un radical aryle. |

3. Colorants de formule selon la revendication 1, dans laquelle

| | |
|---|---|
| $R^1$ et/ou $R^2$ | représentent indépendamment l'un de l'autre un radical alcoyle ou alcényle inférieur qui est substitué directement ou par l'intermédiaire d'un pont par un radical aryle, ou représentent un radical aryle. |

4. Colorants selon les revendications 1 à 3 de formule générale:

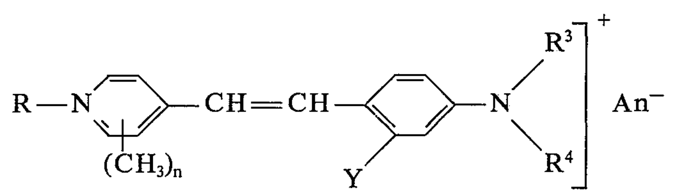

dans laquelle

| | |
|---|---|
| $An^-$ | possède la signification indiquée à la revendication 1, |
| R, $R^3$ et $R^4$ | constituent des radicaux alcoyle ou alcényle inférieurs qui peuvent être substitués par des radicaux non ioniques, au moins un de ces radicaux étant substitué directement ou par l'intermédiaire d'un pont par un radical aryle, ou bien un des radicaux |
| $R^3$ ou $R^4$ | signifiant un radical aryle, |
| n | est 0 à 2 et |
| Y | H, $CH_3$, $OCH_3$, $OC_2H_5$ ou Cl. |

5. Colorants selon les revendications 1 à 3 de formule générale:

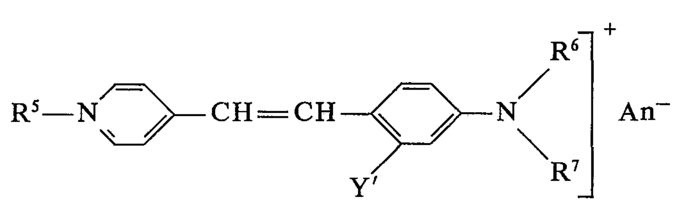

dans laquelle

| | |
|---|---|
| $An^-$ | possède la signification indiquée plus haut, |
| $R^5$, $R^6$ et $R^7$ | représentent un alcoyle en $C_1$ à $C_4$ qui peut être substitué par un phényle ou un alcoxy($C_1$ à $C_4$)carbonyle, un alcényle en $C_3$ ou $C_4$ qui peut être substitué par un phényle, un alcoyle en $C_2$ à $C_4$ qui est substitué par un hydroxy, alcoxy en $C_1$ à $C_4$, phénoxy, benzyloxy, benzoyloxy, benzamido, phénylsulfamido, mésylamino, alcoyl($C_1$ à $C_3$)-carbonyloxy, alcoyl($C_1$ à $C_4$)carbamoyloxy, phénylcarbamoyloxy, du chlore ou cyano, ou un alcoyle en $C_3$ ou $C_4$ qui est substitué par 2 hydroxy, méthoxy, éthoxy, acétoxy ou du chlore, les radicaux phényle de leur côté pouvant être substitués par un hydroxy, alcoxy en $C_1$ à $C_4$, alcoxy($C_1$ à $C_4$)carbonyle, cycloalcoyle |

en $C_5$ ou $C_6$, benzyle, 2-phényl-propyle(2), phénoxy, benzyloxy, phénylmercapto, phénylsulfonyle, nitro, cyano ou par 1 à 3 fluor, chlore, brome ou alcoyle en $C_1$ à $C_4$.,

au moins un des radicaux

$R^5$, $R^6$ ou $R^7$ signifiant un groupe alcoyle en $C_1$ à $C_4$ qui est substitué par un phényle ou un des radicaux cités précédemment contenant un groupe phényle, ou bien

$R^6$ ou $R^7$ représente un groupe phényle qui peut être substitué par les radicaux cités précédemment, et

Y' est de l'hydrogène ou un méthyle.

6. Colorants de formule selon la revendication 5, dans laquelle

$R^5$, $R^6$, $R^7$ représentent un alcényle en $C_3$ ou $C_4$, alcoyle en $C_1$ à $C_3$ qui peut être substitué par un phényle ou alcoxy($C_1$ à $C_4$)carbonyle, un alcoyle en $C_2$ ou $C_3$ qui est substitué par un alcoxy en $C_1$ à $C_4$, phénoxy, benzyloxy, benzoyloxy, alcoyl($C_1$ à $C_3$)carbonyloxy, phénylcarbamoyloxy, du chlore ou cyano, ou un alcoyle en $C_3$ ou $C_4$ qui est substitué par 1 ou 2 hydroxy, méthoxy, éthoxy, acétoxy ou chlore, les radicaux phényle de leur côté pouvant être substitués par un hydroxy, alcoxy en $C_1$ à $C_4$, cyclohexyle, benzyle, 2-phényl-propyle(2), phénoxy, benzyloxy ou du brome ou par 2 chlore ou par 1 à 3 alcoyle en $C_1$ à $C_4$.

7. Procédé de fabrication de colorants selon la revendication 1, caractérisé en ce qu'on condense des sels quaternaires de formule

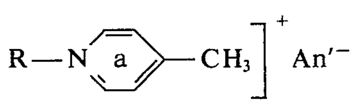

dans laquelle

R et le noyau a ont la signification illustrée à la revendication 1 et

$An^-$ représente un anion qui peut être différent de l'$An^-$ du colorant final,

avec des aldéhydes de formule

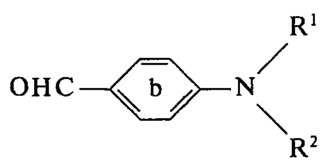

dans laquelle

$R^1$, $R^2$ et le noyau b ont la signification indiquée à la revendication 1.

8. Procédé selon la revendication 7, caractérisé en ce qu'on exécute la condensation dans un solvant organique à des températures entre 20 et 140° C.

9. Procédé selon la revendication 8, caractérisé en ce qu'on exécute la condensation en présence d'un catalyseur basique.

10. Utilisation des composés selon la revendication 1 pour la teinture, l'impression et la teinture dans la masse du polyacrylonitrile, de polyesters et polyamides modifiés à l'acide, de l'acétate de cellulose, des fibres de coco, du jute, du sisal, de la soie, du coton tanné, du cuir, des papiers encollés et non encollés de même que pour la préparation de pâtes de stylo à bille et d'encres à tampon et dans l'impression offset.